# EUROPEAN PATENT SPECIFICATION

(11) **EP 3 884 727 B1**
(45) Date of publication and mention of the grant of the patent: **22.03.2023**
(21) Application number: 20704752.3
(22) Date of filing: 16.01.2020
(51) Int. Cl.: H04W 74/08

(54) **ACTIVE COORDINATION SET FOR SHARED-SPECTRUM ENVIRONMENTS**
AKTIVES KOORDINATIONSSET FÜR UMGEBUNGEN MIT GEMEINSAM GENUTZTEN SPEKTREN
ENSEMBLE DE COORDINATION ACTIF POUR ENVIRONNEMENTS À SPECTRE PARTAGÉS

(30) Priority: 18.01.2019 US 201962794419 P
(43) Date of publication of application: 29.09.2021
(73) Proprietor: Google LLC, Mountain View, CA 94043 (US)
(72) Inventor: WANG, Jibing, Mountain View, California 94043 (US); STAUFFER, Erik Richard, Mountain View, California 94043 (US)
(74) Representative: Cupitt, Philip Leslie
(86) International application number: PCT/US2020/013850
(87) International publication number: WO 2020/150456

(56) References cited:
- US-A1- 2011 038 352
- NOKIA NETWORKS: "On LAA LBT design enabling frequency reuse", 3GPP DRAFT; R1-151843 LAA REUSE 1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Belgrade, Serbia; 20150420 - 20150424 19 April 2015 (2015-04-19), XP050934703, Retrieved from the Internet: URL:http://www.3gpp.org/ftp/Meetings_3GPP_ SYNC/RAN1/Docs/ [retrieved on 2015-04-19]
- MOTOROLA: "Transport Format Constraints for MBMS Soft Combining", 3GPP DRAFT; R1-040734, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Cannes, France; 20040621 - 20040624 18 June 2004 (2004-06-18), XP050951813, Retrieved from the Internet: URL:http://www.3gpp.org/ftp/tsg_ran/WG1_RL 1/TSGR1_AH/Rel-6_AH_0406/Docs/ZIPs/ [retrieved on 2004-06-18]

## Description

### BACKGROUND

The evolution of wireless communication to fifth generation (5G) and sixth generation (6G) standards and technologies provides higher data rates and greater capacity, with improved reliability and lower latency, which enhances mobile broadband services. 5G and 6G technologies also provide new classes of services for vehicular, fixed wireless broadband, and the Internet of Things (IoT).

A unified air interface, which utilizes licensed, unlicensed, and shared license radio spectrum, in multiple frequency bands, is one aspect of enabling the capabilities of 5G and 6G systems. The 5G and 6G air interface utilizes radio spectrum in bands below 1 GHz (sub-gigahertz), below 6 GHz (sub-6 GHz), and above 6 GHz. Radio spectrum above 6 GHz includes millimeter wave (mmWave) frequency bands that provide wide channel bandwidths to support higher data rates for wireless broadband.

To increase data rates, throughput, and reliability for a user equipment, various forms of wireless connectivity that use multiple radio links between base stations and the user equipment are supported in 5G and 6G systems. Techniques such as dual connectivity or coordinated multipoint communications, often coupled with beamformed signals, can improve data rates, throughput, and reliability, especially as received signal strengths decrease for the user equipment near the edge of cells. The use of these radio link configurations increases the complexity of mobility management to maintain high data rates and reliability for the user equipment.

Conventional mobility management techniques are based on base station neighbor relationships and use handovers to maintain connectivity for the user equipment in a licensed radio spectrum. These kinds of conventional handover techniques, however, can be less effective in shared-spectrum environments because of issues such as listen-before-talk regulations imposed in some unlicensed band environments. To comply with listen-before-talk regulations, a base station detects other network traffic from other users and then waits until the channel is clear to transmit, to avoid causing radio-frequency interference or otherwise disrupting network traffic of the other users. Different base stations can have different back-off wait times and therefore different downlink transmission start times and durations, which can make handovers more complex and adversely affect data throughput and latency for the user equipment communicating with the affected base stations.
3GPP contribution R1-151843 describes a method of coordinating a listen-before-talk procedure by aligning DTX/idle periods for multiple eNbs to improve frequency re-use in a Licensed Assisted Access system.

### SUMMARY

The invention is defined by the independent claims. Embodiments are defined by the dependent claims. This summary is provided to introduce simplified concepts of an active coordination set for shared-spectrum environments. The simplified concepts are further described below in the Detailed Description. This summary is not intended to identify essential features of the claimed subject matter, nor is it intended for use in determining the scope of the claimed subject matter.

A method for operating, in a shared-spectrum environment, an active coordination set, ACS, for joint wireless communication between a user equipment and a first base station of multiple base stations included in the ACS, the method comprising: performing, by the first base station included in the ACS, a first listen-before-talk, LBT, operation; determining, based on an outcome of the first LBT operation, that the first base station included in the ACS is free to begin a downlink, DL, transmission to the user equipment; and communicating, by the first base station included in the ACS, first transmit-timing information, TTI, to a second base station of the multiple base stations included in the ACS, the communicating performed using an Xn interface or an X2 interface in order to jointly transmit with the second base station the DL transmission to the user equipment.

### BRIEF DESCRIPTION OF THE DRAWINGS

Aspects of an active coordination set for shared-spectrum environments are described with reference to the following drawings. The same numbers are used throughout the drawings to reference like features and components:
FIG. 1 illustrates an example wireless network system in which various aspects of an active coordination set for shared-spectrum environments can be implemented.
FIG. 2 illustrates an example device diagram that can implement various aspects of an active coordination set for shared-spectrum environments.
FIG. 3 illustrates an air interface resource that extends between a user equipment and a base station and with which various aspects of an active coordination set for shared-spectrum environments techniques can be implemented.
FIG. 4 illustrates an example of a user equipment moving through a radio access network that includes multiple base stations in accordance with aspects of an active coordination set for shared-spectrum environments techniques.
FIG. 5 illustrates an example environment in which various aspects of an active coordination set for shared-spectrum environments can be implemented.
FIG. 6 illustrates an example of data and control transactions between devices in accordance with aspects of an active coordination set for shared-spectrum environments techniques.
FIGs. 7 and 8 illustrate example methods of an active coordination set for shared-spectrum environments generally related to listen-before-talk (LBT) operations that one or more base stations included in the ACS perform, in accordance with aspects of the techniques described herein, to determine whether the base station is free to begin a downlink transmission.

### DETAILED DESCRIPTION

This document describes methods, devices, systems, and means for an active coordination set for shared-spectrum environments. As noted, 5G NR and 6G technologies can use techniques such as Coordinated MultiPoint (CoMP) or Dual Connectivity (DC) over beamformed wireless connections to provide higher data rates, even at the edges of 5G and 6G cells. The management of user equipment mobility and handovers, however, becomes increasingly complex in these environments, especially in shared-spectrum environments because of regulatory requirements, such as listen-before-talk requirements in some unlicensed band environments.

Conventional techniques, such as neighbor relation tables, are used to describe neighbor cells of a serving cell, which may be potential target base stations to receive the user equipment in a handover. These techniques are base-station-specific, do not fully account for the changing radio-channel environment of a user equipment, and interrupt data communication for the user equipment during the handover. An active coordination set (ACS) combines the selection of base stations of a mobile-assisted handover with beamforming. Each time a particular ACS is updated, the selection of base stations and beamforming weights are updated in the ACS associated with the user equipment.

The ACS is a user equipment-specific set of base stations (e.g., 5G and/or 6G base stations) that are determined by the user equipment to be usable for wireless communication. More specifically, the base stations in the ACS are usable for joint transmission and/or reception (joint communication) between the user equipment and one or more of the base stations in the ACS. The joint transmission and/or reception techniques includes CoMP, Single Radio Access Technology (RAT) Dual Connectivity (single-RAT DC), and/or Multi-Radio Access Technology Dual Connectivity (MR-DC). Joint communication includes communication between the user equipment and multiple base stations, or communication between the user equipment and multiple sectors of a single base station. The joint communication includes communication in a single radio frequency band or communication in multiple radio frequency bands, including in shared-spectrum frequencies such as an unlicensed band or the citizens broadband radio service (CBRS).

In cases in which the joint communication includes communication in a shared-spectrum frequency such as an unlicensed band or the CBRS, the base stations included in the ACS may be required (*e.g.*, by telecommunication regulations) to perform a listen-before-talk (LBT) operation, such as a clear channel assessment (CCA), to determine whether the channel is already in use. Because different base stations in the ACS can have different back-off times while performing the LBT operation, a downlink (DL) transmission duration for a slot and a particular user equipment can also be different across the base stations in the ACS.

In contrast, the described techniques allow multiple base stations included in the ACS to perform the LBT operation before each DL transmission duration and coordinate the timing of when the DL transmission from a particular base station can begin. A base station included in the ACS performs the LBT operation and, if the base station determines that it is not free to begin the DL transmission to the user equipment, the base station can perform a back-off countdown operation. Subsequent to performing the back-off operation, the base station performs another LBT operation to determine whether the channel is clear. When the base station determines that it is free to begin a DL transmission, the base station transmits the DL transmission and communicates transmit-timing information (TTI) to other base stations included in the ACS or to a master base station of the ACS, which can relay the TTI to the other base stations in the ACS.

In some cases, if the base station has not received the TTI information from the other base stations in the ACS prior to transmitting the DL transmission, the base station may request the TTI of the other base stations from the master base station. In any of these cases, the base station can communicate the TTI using any suitable method, such as an Xn interface or an X2 interface, and the communication of the TTI can enable the base station and the other base station (or base stations) to jointly transmit the DL transmission to the user equipment. Further, after the LBT operation indicates that the base station can transmit, the base station may wait to begin the DL transmission at a symbol boundary (*e.g*., as determined based on the TTI) of an orthogonal frequency-division multiplexing (OFDM) symbol. The base stations may also or instead wait to begin the DL transmission at an OFDM symbol that includes a user equipment reference signal.

Using the described techniques, the DL transmission duration can be coordinated across the base stations within the ACS for the particular user equipment. In this way the user equipment can take advantage of the scheduling efficiency and reduced inter-cell interference that is provided by the ACS, while maintaining the higher data rates and lower latency available in 5G and 6G networks.

While features and concepts of the described systems and methods for an active coordination set for shared-spectrum environments can be implemented in any number of different environments, systems, devices, and/or various configurations, aspects of an active coordination set for shared-spectrum environments are described in the context of the following example devices, systems, and configurations.

### Example Environment

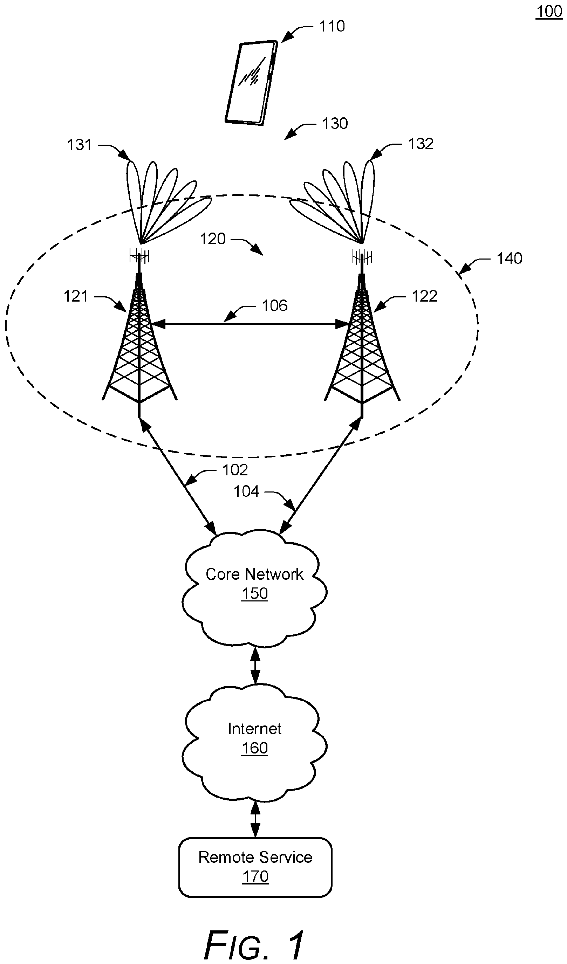

FIG. 1 illustrates an example environment 100 in which various aspects of an active coordination set for shared-spectrum environments can be implemented. The example environment 100 includes a user equipment 110 (UE 110) that communicates with one or more base stations 120 (illustrated as base stations 121 and 122), through one or more wireless communication links 130 (wireless link 130), illustrated as wireless links 131 and 132. In this example, the user equipment 110 is implemented as a smartphone. Although illustrated as a smartphone, the user equipment 110 can be implemented as any suitable computing or electronic device, such as a mobile communication device, a modem, cellular phone, gaming device, navigation device, media device, laptop computer, desktop computer, tablet computer, smart appliance, or vehicle-based communication system. The base stations 120 (*e.g.,* an Evolved Universal Terrestrial Radio Access Network Node B, E-UTRAN Node B, evolved Node B, eNodeB, eNB, Next Generation Node B, gNode B, gNB, a 6G node B, or the like) can be implemented in a macrocell, microcell, small cell, picocell, and the like, or any combination thereof.

The base stations 120 communicate with the user equipment 110 through the wireless links 131 and 132, which can be implemented as any suitable type of wireless link. The wireless links 131 and 132 can include a downlink of data and control information communicated from the base stations 120 to the user equipment 110, an uplink of other data and control information communicated from the user equipment 110 to the base stations 120, or both. The wireless links 130 may include one or more wireless links or bearers implemented using any suitable communication protocol or standard, or combination of communication protocols or standards such as 3rd Generation Partnership Project Long-Term Evolution (3GPP LTE), Fifth Generation New Radio (5GNR), 6G, and so forth. Multiple wireless links 130 can be aggregated in a carrier aggregation to provide a higher data rate for the user equipment 110. Multiple wireless links 130 from multiple base stations 120 can be configured for joint transmissions, such as Coordinated Multipoint (CoMP) communication with the user equipment 110. Additionally, the multiple wireless links 130 can be configured for dual connectivity communication using different radio access technology (RAT) configurations, such as single-RAT dual connectivity (single-RAT-DC) or multi-RAT dual connectivity (MR-DC).

The base stations 120 are collectively a Radio Access Network 140 (RAN, Evolved Universal Terrestrial Radio Access Network, E-UTRAN, 5GNR RAN or NR RAN). The base stations 121 and 122 in the RAN 140 are connected to a core network 150, such as a Fifth Generation Core (5GC) or 6G core network. The base stations 121 and 122 connect, at 102 and 104 respectively, to the core network 150 using an NG2 interface (or a similar 6G interface) for control-plane signaling and using an NG3 interface (or a similar 6G interface) for user-plane data communications. In addition to connections to core networks, base stations 120 may communicate with each other using an Xn Application Protocol (XnAP), at 106, to exchange user-plane and control-plane data. The user equipment 110 may also connect, through the core network 150, to public networks, such as the Internet 160 to interact with a remote service 170.

### Example Devices

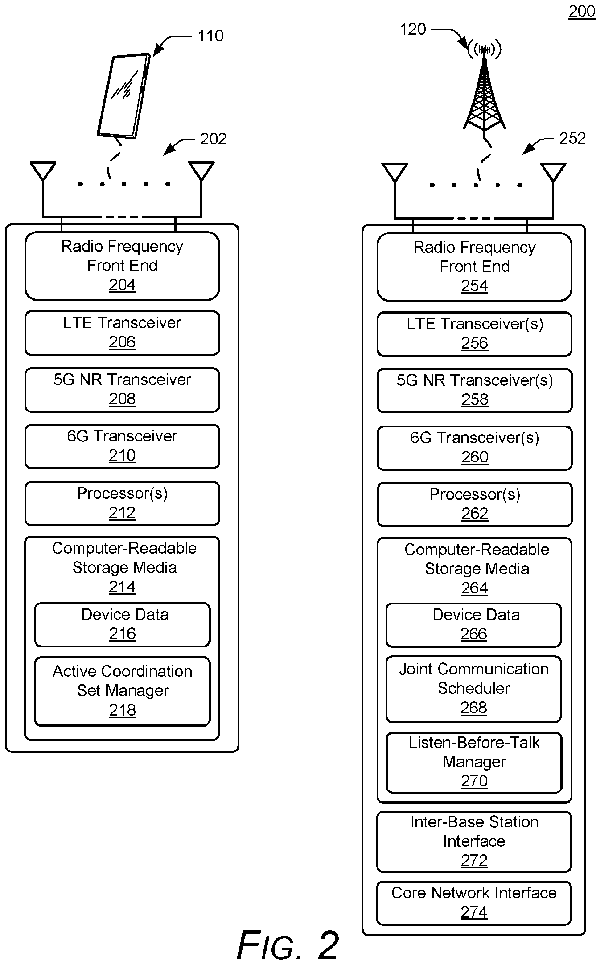

FIG. 2 illustrates an example device diagram 200 of the user equipment 110 and the base stations 120. The user equipment 110 and the base stations 120 may include additional functions and interfaces that are omitted from FIG. 2 for the sake of clarity. The user equipment 110 includes antennas 202, a radio frequency front end 204 (RF front end 204), an LTE transceiver 206, a 5GNR transceiver 208, and a 6G transceiver 210 for communicating with base stations 120 in the RAN 140. The RF front end 204 of the user equipment 110 can couple or connect the LTE transceiver 206, the 5G NR transceiver 208, and the 6G transceiver 210 to the antennas 202 to facilitate various types of wireless communication. The antennas 202 of the user equipment 110 may include an array of multiple antennas that are configured similarly to or differently from each other. The antennas 202 and the RF front end 204 can be tuned to, and/or be tunable to, one or more frequency bands defined by the 3GPP LTE, 5G NR, and 6G communication standards and implemented by the LTE transceiver 206, the 5GNR transceiver 208, and/or the 6G transceiver 210. Additionally, the antennas 202, the RF front end 204, the LTE transceiver 206, the 5GNR transceiver 208, and/or the 6G transceiver 210 can be configured to support beamforming for the transmission and reception of communications with the base stations 120. By way of example and not limitation, the antennas 202 and the RF front end 204 can be implemented for operation in sub-gigahertz bands, sub-6 GHZ bands, and/or above 6 GHz bands that are defined by the 3GPP LTE, 5GNR, and 6G communication standards.

The user equipment 110 also includes processor(s) 212 and computer-readable storage media 214 (CRM 214). The processor 212 can have a single core processor or multiple core processors composed of a variety of materials, such as silicon, polysilicon, high-K dielectric, copper, and so on. The computer-readable storage media described herein excludes propagating signals. CRM 214 may include any suitable memory or storage device such as random-access memory (RAM), static RAM (SRAM), dynamic RAM (DRAM), non-volatile RAM (NVRAM), read-only memory (ROM), or Flash memory useable to store device data 216 of the user equipment 110. The device data 216 includes user data, multimedia data, beamforming codebooks, applications, and/or an operating system of the user equipment 110, which are executable by processor(s) 212 to enable user-plane communication, control-plane signaling, and user interaction with the user equipment 110.

In some implementations, the CRM 214 may also include an active coordination set (ACS) manager 218. The ACS manager 218 can communicate with the antennas 202, the RF front end 204, the LTE transceiver 206, the 5G NR transceiver 208, and/or the 6G transceiver 210 to monitor the quality of the wireless communication links 130. Based on this monitoring, the ACS manager 218 can determine to add or remove base stations 120 from the ACS. In at least some aspects, the ACS manager 218 can be configured to implement the techniques for an active coordination set for shared-spectrum environments as described herein. For example, the user equipment 110 may use the ACS manager 218 to perform all or part of a channel estimation operation that is based on a reference signal, as described below.

The device diagram for the base stations 120, shown in FIG. 2, includes a single network node (*e.g.,* a gNode B). The functionality of the base stations 120 can be distributed across multiple network nodes or devices and can be distributed in any fashion suitable to perform the functions described herein. The base stations 120 include antennas 252, a radio frequency front end 254 (RF front end 254), one or more LTE transceivers 256, one or more 5GNR transceivers 258, and/or one or more 6G transceivers 260 for communicating with the UE 110. The RF front end 254 of the base stations 120 can couple or connect the LTE transceivers 256, the 5G NR transceivers 258, and/or the 6G transceivers 260 to the antennas 252 to facilitate various types of wireless communication. The antennas 252 of the base stations 120 may include an array of multiple antennas that are configured similarly to or differently from each other. The antennas 252 and the RF front end 254 can be tuned to, and/or be tunable to, one or more frequency band defined by the 3GPP LTE, 5GNR, and 6G communication standards, and implemented by the LTE transceivers 256, one or more 5GNR transceivers 258, and/or one or more 6G transceivers 260. Additionally, the antennas 252, the RF front end 254, the LTE transceivers 256, one or more 5GNR transceivers 258, and/or one or more 6G transceivers 260 can be configured to support beamforming, such as Massive-MIMO, for the transmission and reception of communications with the UE 110.

The base stations 120 also include processor(s) 262 and computer-readable storage media 264 (CRM 264). The processor 262 can have a single core processor or multiple core processors composed of a variety of materials, such as silicon, polysilicon, high-K dielectric, copper, and so on. CRM 264 may include any suitable memory or storage device such as random-access memory (RAM), static RAM (SRAM), dynamic RAM (DRAM), non-volatile RAM (NVRAM), read-only memory (ROM), or Flash memory useable to store device data 266 of the base stations 120. The device data 266 includes network scheduling data, radio resource management data, beamforming codebooks, applications, and/or an operating system of the base stations 120, which are executable by processor(s) 262 to enable communication with the user equipment 110.

CRM 264 also includes a joint communication scheduler 268. In at least some aspects, the joint communication scheduler 268 configures the LTE transceivers 256, the 5GNR transceivers 258, and the 6G transceiver(s) 260 for communication with the user equipment 110, as well as communication with a core network, such as the core network 150, and routing user-plane and control-plane data for joint communication. Additionally, the joint communication scheduler 268 may allocate air interface resources and schedule communications for the UE 110 and base stations 120 in the ACS when the base station 120 acts as a master base station for the base stations 120 in the ACS. While shown as part of the CRM 264 in FIG. 2, the joint communication scheduler 268 can be implemented in whole or part as hardware logic or circuitry integrated with, or separate from, other components of the base stations 120. The j oint communication scheduler 268 can also store and transmit information, related to the ACS, to other components of the base stations 120 or to other devices.

The CRM 264 also includes a listen-before-talk (LBT) manager application (LBT manager) 270. Alternately or additionally, the LBT manager 270 can be implemented in whole or part as hardware logic or circuitry integrated with or separate from other components of the base stations 120. In at least some aspects, the LBT manager 270 performs, or directs the base stations 120 to perform, one or more of a listen-before-talk (LBT) operation and a back-off countdown operation. The LBT manager 270 may also transmit, or direct the base stations 120 to transmit, a DL transmission to the user equipment 110. Additionally, the LBT manager 270 may communicate, or direct the base stations 120 to communicate, transmit-timing information (TTI) to one or more other base stations 120 included in the ACS, in order to coordinate DL transmission timing and duration.

The base stations 120 include an inter-base station interface 272, such as an Xn and/or X2 interface, which the j oint communication scheduler 268 configures to exchange user-plane and control-plane data between other base stations 120, to manage the communication of the base stations 120 with the user equipment 110. The base stations 120 include a core network interface 274 that the joint communication scheduler 268 configures to exchange user-plane and control-plane data with core network functions and/or entities.

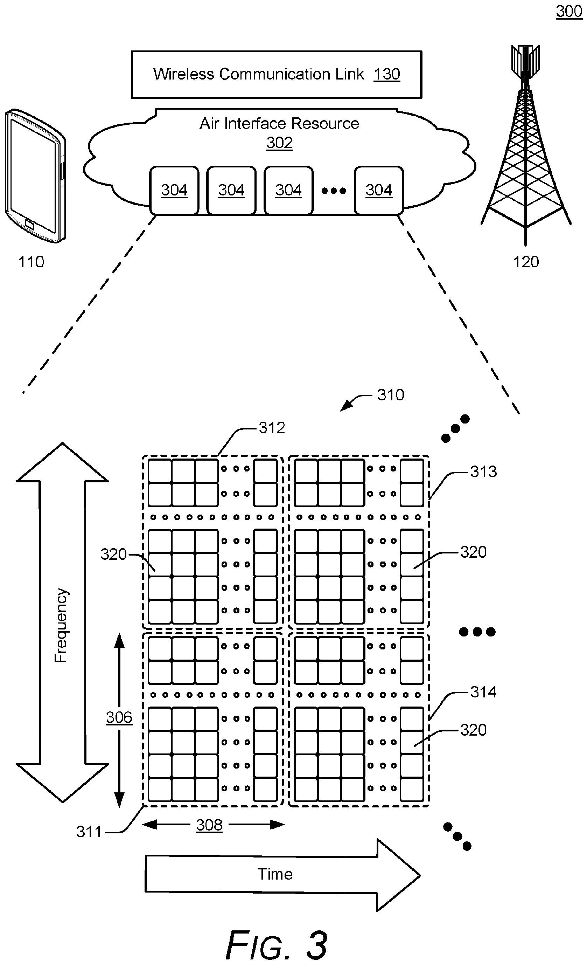

FIG. 3 illustrates an air interface resource that extends between a user equipment 110 and a base station 120 and with which various aspects of an active coordination set for shared-spectrum environments can be implemented. The air interface resource 302 can be divided into resource units 304, each of which occupies some intersection of frequency spectrum and elapsed time. A portion of the air interface resource 302 is illustrated graphically in a grid or matrix having multiple resource blocks 310, including example resource blocks 311, 312, 313, 314. An example of a resource unit 304 therefore includes at least one resource block 310. As shown, time is depicted along the horizontal dimension as the abscissa axis, and frequency is depicted along the vertical dimension as the ordinate axis. The air interface resource 302, as defined by a given communication protocol or standard, may span any suitable specified frequency range, and/or may be divided into intervals of any specified duration. Increments of time can correspond to, for example, milliseconds (mSec). Increments of frequency can correspond to, for example, megahertz (MHz).

In example operations generally, the base stations 120 allocate portions (*e.g.*, resource units 304) of the air interface resource 302 for uplink and downlink communications. Each resource block 310 of network access resources can be allocated to support respective wireless communication links 130 of multiple user equipment 110. In the lower left corner of the grid, the resource block 311 may span, as defined by a given communication protocol, a specified frequency range 306 and include multiple subcarriers or frequency sub-bands. The resource block 311 may include any suitable number of subcarriers (*e.g*., 12) that each correspond to a respective portion (*e.g.,* 15 kHz) of the specified frequency range 306 (*e.g.,* 180 kHz). The resource block 311 may also span, as defined by the given communication protocol, a specified time interval 308 or time slot (*e.g*., lasting approximately one-half millisecond or 7 orthogonal frequency-division multiplexing (OFDM) symbols). The time interval 308 includes subintervals that may each correspond to a symbol, such as an OFDM symbol. As shown in FIG. 3, each resource block 310 may include multiple resource elements 320 (REs) that correspond to, or are defined by, a subcarrier of the frequency range 306 and a subinterval (or symbol) of the time interval 308. Alternatively, a given resource element 320 may span more than one frequency subcarrier or symbol. Thus, a resource unit 304 may include at least one resource block 310, at least one resource element 320, and so forth.

In example implementations, multiple user equipment 110 (one of which is shown) are communicating with the base stations 120 (one of which is shown) through access provided by portions of the air interface resource 302. The joint communication scheduler 268 (shown in FIG. 2) may determine a respective data rate, type of information, or amount of information (*e.g.*, data or control information) to be communicated (*e.g.*, transmitted) by the user equipment 110. For example, the joint communication scheduler 268 can determine that each user equipment 110 is to transmit at a different respective data rate or transmit a different respective amount of information. The joint communication scheduler 268 then allocates one or more resource blocks 310 to each user equipment 110 based on the determined data rate or amount of information.

Additionally, or in the alternative to block-level resource grants, the joint communication scheduler 268 may allocate resource units at an element-level. Thus, the joint communication scheduler 268 may allocate one or more resource elements 320 or individual subcarriers to different user equipment 110. By so doing, one resource block 310 can be allocated to facilitate network access for multiple user equipment 110. Accordingly, the joint communication scheduler 268 may allocate, at various granularities, one or up to all subcarriers or resource elements 320 of a resource block 310 to one user equipment 110 or divided across multiple user equipment 110, thereby enabling higher network utilization or increased spectrum efficiency. The joint communication scheduler 268 can also communicate with the ACS 270 to reschedule and/or reallocate resource portions (*e.g.*, resource units 304, resource blocks 310, or resource elements 320) of the air interface resource 302 in conjunction with LBT and back-off operations performed when using shared-spectrum resources, such as resources in an unlicensed band or in a citizens broadband radio service (CBRS) spectrum.

The joint communication scheduler 268 can therefore allocate air interface resource 302 by resource unit 304, resource block 310, frequency carrier, time interval, resource element 320, frequency subcarrier, time subinterval, symbol, spreading code, some combination thereof, and so forth. Based on respective allocations of resource units 304, the joint communication scheduler 268 can transmit respective messages to the multiple user equipment 110 indicating the respective allocation of resource units 304 to each user equipment 110. Each message may enable a respective user equipment 110 to queue the information or configure the LTE transceiver 206, the 5G NR transceiver 208, and/or the 6G transceiver 210 to communicate using the allocated resource units 304 of the air interface resource 302.

### Active Coordination Set

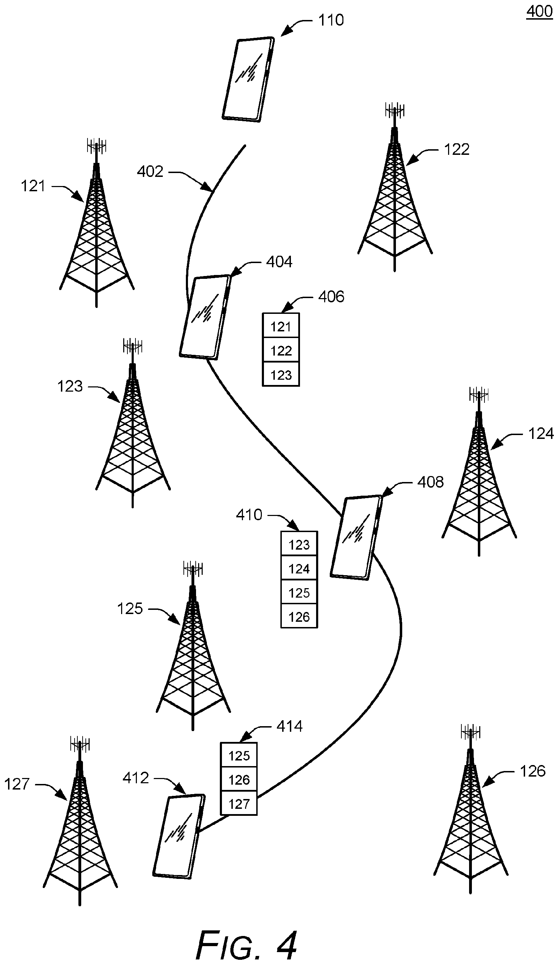

In aspects, an active coordination set for shared-spectrum environments is described with which the base stations 120 can perform listen-before-talk (LBT) and back-off countdown operations in a shared-spectrum environment to align downlink (DL) transmission durations across the ACS. FIG. 4 illustrates an example environment 400 in which a user equipment 110 is moving through a radio access network (RAN) that includes multiple base stations 120, illustrated as base stations 121-127. These base stations may utilize different technologies (*e.g*., LTE, 5G NR, 6G) at a variety of frequencies (*e.g*., sub-gigahertz, sub-6 GHz, and above 6 GHz bands and sub-bands, including unlicensed band frequencies).

For example, the user equipment 110 follows a path 402 through the Radio Access Network (RAN) 140. The user equipment 110 periodically measures the link quality (*e.g.*, of base stations that are currently in the ACS and candidate base stations that the user equipment 110 may add to the ACS. For example, at position 404, the ACS at 406 includes the base stations 121, 122, and 123. As the user equipment 110 continues to move, at position 408, the user equipment 110 has deleted base station 121 and base station 122 from the ACS and added base stations 124, 125, and 126, as shown at 410. Continuing along the path 402, the user equipment 110, at position 412, has deleted the base stations 123 and 124 and added the base station 127, as shown in the ACS at 414.

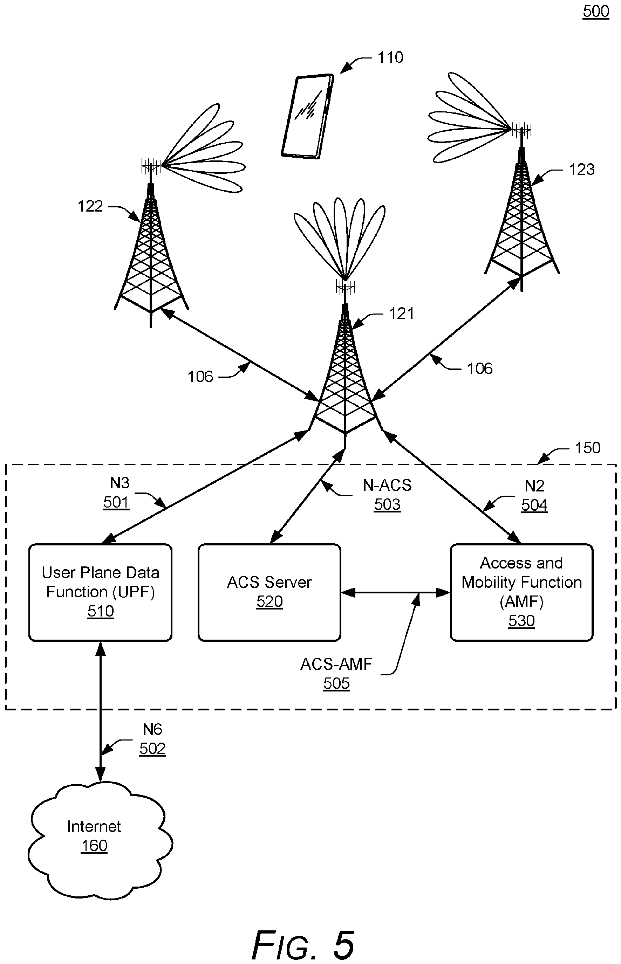

FIG. 5 illustrates an example environment 500 in which various aspects of an active coordination set for shared-spectrum environments can be implemented. The user equipment 110 is engaged in joint transmission and/or reception (joint communication) with the three base stations 121, 122, and 123. The base station 121 is acting as a master base station for the joint transmission and/or reception. Which base station is the master base station is transparent to the user equipment 110, and the master base station can change as base stations are added and/or removed from the ACS. The master base station coordinates control-plane and user-plane communications for the joint communication with the user equipment 110 using the Xn interfaces 106 (or a similar 6G interface) to the base stations 122 and 123 and maintains the user-plane context between the user equipment 110 and the core network 150. The coordination may be performed using proprietary or standards-based messaging, procedures, and/or protocols.

The master base station schedules air interface resources for the joint communication for the user equipment 110 and the base stations 121, 122, and 123, based on the ACS associated with the user equipment 110. The master base station (base station 121) connects, using an N3 interface 501 (or a 6G equivalent interface), to the User Plane Function 510 (UPF 510) in the core network 150 for the communication of user-plane data to and from the user equipment 110. The master base station distributes the user-plane data to all the base stations in the joint communication using the Xn interfaces 106. The UPF 510 is further connected to a data network, such as the Internet 160 through the N6 interface 502.

Downlink data for the user equipment 110 can be sent from all of the base stations 120 in the ACS or any subset of the base stations 120 in the ACS. The master base station 121 determines which combination of base stations 120 in the ACS to use to transmit downlink data to the user equipment 110. The selection of base stations 120 to use to transmit downlink data can be based on one or more factors, such as application quality of service (QoS) requirements, location of the user equipment 110, velocity of the user equipment 110, a Reference Signal Received Power (RSRP), a Received Signal Strength Indicator (RSSI), interference, or the like. The user equipment 110 uplink data can be received by all of the base stations 120 in the ACS or any subset of the base stations 120 in the ACS.

When one or more of the base stations 120 in the ACS are operating in a shared-spectrum environment, such as an unlicensed band or the CBRS, the base stations 120 may perform a listen-before-talk (LBT) operation prior to sending downlink data (*e.g*., a DL transmission). The base stations 120 may perform the LBT operation using, for example, the LBT manager 270. The LBT operation is a technique for determining whether a scheduled transmission channel is available for use by a device.

The LBT operation includes procedures such as a clear channel assessment (CCA), or an extended CCA (eCCA), and wait times, such as a back-off countdown. To use the CCA (or eCCA) procedures, the base stations 120 monitor the energy level on the scheduled channel and, based on a common threshold (*e.g*., an energy detect threshold), determine whether the channel is available (*e.g*., clear). If the channel is clear, transmission may commence. If the channel is not clear, the base stations 120 wait for a time duration (*e.g.*, a back-off countdown or other duration) and then begin the CCA again, by monitoring the energy level on the channel. In the case of the eCCA procedure, after the channel is clear, the base stations 120 perform an additional number (*e.g*., a randomly determined number) of CCA procedures to assess whether the channel remains clear.

If an outcome of the LBT operation indicates that one or more of the base stations 120 are free to begin the DL transmissions, then those base stations 120 transmit (and/or jointly transmit) the DL transmission, in accordance with the ACS procedures described herein.

If the outcome of the LBT operation indicates that one or more of the base stations 120 are not free to begin the DL transmission to the user equipment, the base stations 120 that are not free to transmit can perform another LBT operation. If it is determined, based on an outcome of the other LBT operation, that one or more of the base stations 120 that performed the other LBT operation are free to begin the DL transmission, those base stations 120 then transmit the DL transmission in accordance with the ACS procedures described herein. When the base stations 120 that are determined to be free to transmit (*e.g*., based on the outcome of either LBT operation) begin to transmit the DL transmission, those base stations 120 also communicate transmit-timing information (TTI) to one or more other base stations included in the ACS. In some implementations, communicating the TTI enables the base stations in the ACS to jointly transmit the DL transmission to the user equipment 110.

In some cases, the base stations 120 that transmit the DL transmission may communicate the TTI by transmitting the TTI directly to the other base stations 120 in the ACS (*e.g*., using the joint communication scheduler 268 or the LBT manager 270). In other cases, the TTI may be transmitted to a master base station (*e.g*., the base station 121) that is configured to relay the TTI to the multiple base stations included in the ACS. In either case, the TTI can be communicated between the base stations 120 using any suitable method, such as using the wireless communication link 130, an X2 interface, the Xn interfaces 106, or a similar 6G interface, as described herein.

Because LBT operations may have different time durations for either or both of the CCA/eCCA procedures and the wait times (*e.g.*, the back-off countdown operation duration) for respective base stations 120, a DL transmission duration for a slot for a particular user equipment can vary between the base stations 120. To align the symbol boundary across the respective different base stations 120 in the ACS, the base stations 120 that have cleared the LBT operation begin the DL transmission at a symbol boundary (*e.g.*, as determined based on the TTI) of an orthogonal frequency-division multiplexing (OFDM) symbol. The base stations 120 can determine the symbol boundary based on the TTI that was communicated between the base stations 120.

For example, as noted, a respective base station 120 that is free to begin transmitting may broadcast the TTI to the other base stations 120. In other cases, after a respective base station 120 has successfully performed the LBT operation and is free to begin transmitting, that base station 120 can request TTI from the master base station before beginning transmitting the DL transmission. Additionally or alternatively, the DL transmission can begin at an OFDM symbol that includes a user equipment reference signal (UE-RS), such as a channel state information reference signal (CSI-RS) or a demodulation reference signal (DMRS). In this way, using symbol boundaries and reference signals, the DL transmission duration from respective base stations 120 will be aligned at a symbol boundary, even though the DL transmission durations of respective different base stations 120 can be different. This alignment can allow the user equipment to properly perform channel estimation operations and take advantage of the scheduling efficiency and reduced inter-cell interference that is provided by the ACS, while maintaining the higher data rates and lower latency available in 5G and 6G networks.

In some implementations of the active coordination set for shared-spectrum environments, the multiple base stations 120 in the ACS delay transmitting until all, or a portion of, the multiple base stations are free to transmit. In these implementations, the multiple base stations 120 perform one or more respective LBT operations (*e.g.*, the multiple base stations 120 may perform one LBT operation or multiple LBT operations).

When an outcome of the LBT operations performed by the respective multiple base stations 120 indicates that at least a portion of the multiple base stations 120 are free to begin the DL transmission, then those base stations 120 transmit the DL transmission to the user equipment 110. The portion may be any suitable portion, and may be adjusted by the base stations or by the user equipment. For example, the portion may be all of the multiple base stations included in the ACS or a percentage of the multiple base stations 120 (*e.g.*, approximately 75 percent or approximately 90 percent). In this way, a DL transmission duration for a portion of the multiple base stations in the ACS, which portion may include all of the base stations in the ACS, can be a same or similar DL transmission duration.

Similarly to downlink data, the master base station 121 determines which combination of base stations 120 in the ACS to use to receive uplink data from the user equipment 110. The selection of base stations 120 to use to receive uplink data can be based on one or more factors, such as application QoS requirements, location of the user equipment 110, velocity of the user equipment 110, RSRP, RSSI, interference, or the like. Typically, the combination of base stations 120 for downlink transmission and uplink reception will be identical, although different combinations of base stations 120 may be used for downlink transmission and uplink reception.

When the user equipment 110 creates or modifies an ACS, the user equipment 110 communicates the ACS or the ACS modification to an ACS Server 520 that stores the ACS for each user equipment 110 operating in the RAN 140. Although shown in the core network 150, alternatively the ACS Server 520 may be an application server located outside the core network 150. The user equipment 110 communicates the ACS or ACS modification through the master base station (base station 121) which is connected to the ACS Server 520 using an N-ACS interface 503. Optionally or alternatively, the user equipment 110 communicates the ACS or ACS modification to the ACS Server 520 using the Access and Mobility Function 530 (AMF 530) which is connected to the master base station (base station 121) through an N2 interface 504. The AMF 530 relays ACS-related communications to and from the ACS Server 520 through an ACS-AMF interface 505. ACS data between the user equipment 110 and the ACS Server 520 can be communicated using Radio Resource Control (RRC) communications, Non-Access Stratum (NAS) communications, or application-layer communications.

The ACS Server 520 may be implemented as a single network node (*e.g.*, a server). The functionality of the ACS Server 520 may be distributed across multiple network nodes and/or devices and may be distributed in any fashion suitable to perform the functions described herein. The ACS Server 520 includes processor(s) and computer-readable storage media. The processor may be a single core processor, or a multiple core processor composed of a variety of materials, such as silicon, polysilicon, high-K dielectric, copper, and so on. CRM may include any suitable memory or storage device such as random-access memory (RAM), static RAM (SRAM), dynamic RAM (DRAM), non-volatile RAM (NVRAM), read-only memory (ROM), hard disk drives, or Flash memory useful to ACS and related data. The CRM includes applications and/or an operating system of the ACS Server 520 which are executable by the processor(s) to enable communication with the user equipment 110, the master base station 121, and the AMF 530. The ACS Server 520 includes one or more network interfaces for communication with the master base station 121, the AMF 530, and other devices in the core network 150, the user equipment 110, and/or devices in the RAN 140.

Whenever there is a change to the contents of the ACS for any particular user equipment 110, the ACS Server 520 sends a copy of the modified ACS to the master base station (base station 121) for that UE. The copy of the ACS stored in the ACS Server 520, can be considered to be the master copy of the ACS for the UE 110. Optionally, in addition to adding and removing base stations 120 and beamforming weights from the ACS, the UE 110 can query the ACS Server 520, using one or more of the base stations 120, to retrieve a copy of the ACS. The master base station uses the ACS to schedule air interface resources for joint communication with the user equipment 110. For example, when a new base station is added to the ACS or an existing base station in the ACS is deleted, the master base station allocates air interface resources for the new base station to participate in the joint communication or deallocates resources for the deleted base station. The master base station relays user-plane data based on the ACS received from the ACS Server 520. Continuing with the example, the master base station starts routing user-plane data to the new base station added to the ACS or terminates relaying data to the existing base station that was removed from the ACS. If the master base station 121 is removed from the ACS, a different base station 120 is designated as the master base station. This change of master base stations is transparent to the UE 110. For example, when the ACS Server 520 determines that the current master base station is to be removed from the ACS, the ACS Server 520 and/or other core network functions, such as the AMF 530, determines which base station 120 in the updated ACS will be the new master base station. A message indicating the change of the master base station is communicated to the current and new master base stations, which is effective to move the functions of managing communication in the ACS from the current master base station to the new master base station.

In aspects, the initial ACS for the user equipment 110 can be established by the user equipment 110 during or after the user equipment 110 performs the attach procedure to connect to the RAN 140. For example, the user equipment 110 can initialize the ACS with the base stations 120 included in the neighbor relation table of the base station through which the user equipment 110 attaches to the RAN 140. In another example, the user equipment 110 considers the base stations 120 included in the neighbor relation table as candidates for the ACS and then measures the link quality of each candidate base station before adding a candidate base station to the ACS. In a further example, the user equipment 110 queries the ACS Server 520 for the last ACS used by the user equipment 110 or an ACS used by this or another user equipment 110 at the current location of the user equipment 110. The user equipment 110 then validates the entries in the last-used ACS to determine which, if any, entries of the last-used ACS are usable for communication and inclusion in the ACS. In another example, the user equipment 110, measures the link quality of any base stations 120 from the previous ACS that are within communication range and populates the ACS with one or more of the base stations 120 that exceed a threshold for inclusion (*e.g*., above a threshold for a Received Signal Strength Indicator (RSSI), a Reference Signal Received Power (RSRP), or a Reference Signal Received Quality (RSRQ)).

The user equipment 110 adds or deletes a base station 120 from the ACS by sending an ACS modification message to the ACS Server 520. The ACS modification message includes an identifier for a base station to add or delete from the ACS along with an indicator to either add or delete the identified base station. When adding a base station to the ACS, the ACS modification message can also include beamforming parameters for the base station being added. Optionally, or additionally, the ACS modification message may include identifiers of multiple base stations with corresponding add/delete indicators for each base station. Other information useful to the management of the ACS may be stored in or with the ACS, such as timestamps for entries in the ACS, geographic location information from the user equipment 110, an identifier for the user equipment 110, identification information for the current master base stations, and the like.

The ACS Server 520 receives the ACS modification message from the user equipment 110 (through the current master base station) and performs the requested modification to an ACS record for the user equipment 110 that is stored by the ACS server 520. After receiving the ACS modification message, the ACS Server 520 sends a modified copy of the ACS for the user equipment 110 to the master base station (base station 121) through the N-ACS interface 503. Optionally or alternatively, the ACS Server 520 may send only the modification of the ACS to the master base station which directs the master base station to update its copy of the ACS. The joint communication scheduler 268 in the master base station uses the updated or modified ACS to modify the scheduling of resources and joint communications for the base stations 120 in the ACS. The master base station can perform real-time scheduling of resources within the ACS of the user equipment 110 to respond to changing channel conditions or communication requirements with low latency requirements.

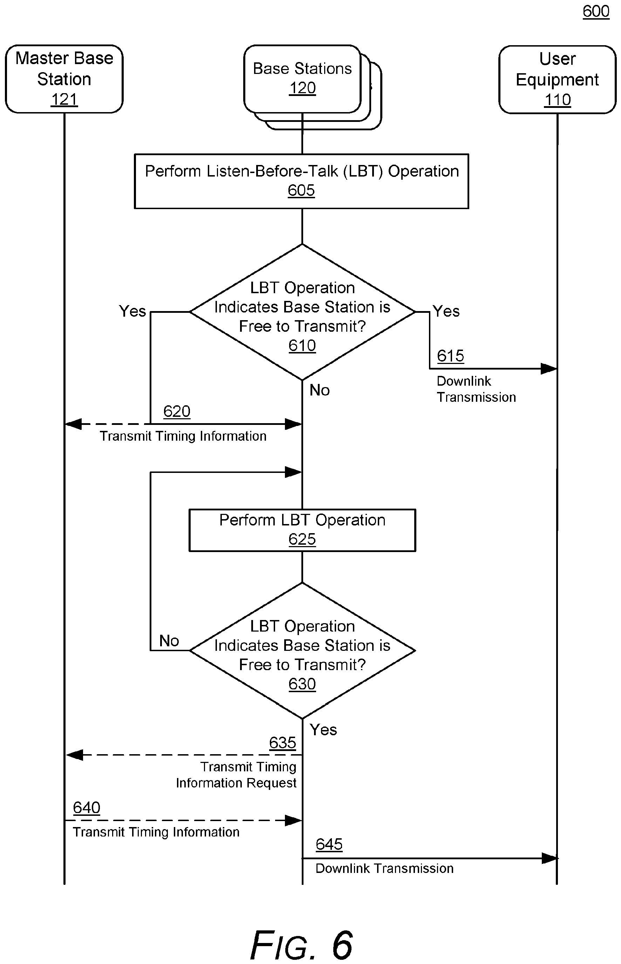

As described above, the base stations may perform listen-before-talk (LBT) operations in a shared-spectrum environment to align DL transmission durations across the ACS. FIG. 6 illustrates an example of control transactions 600 between devices in accordance with aspects of an active coordination set for shared-spectrum environments that generally relate to listen-before-talk (LBT) operations. At 605, one or more of the base stations 120 perform an LBT operation (*e.g*., a CCA or eCCA procedure as described above) to determine whether one or more of the base stations 120 are free to begin a DL transmission.

At 610, an outcome of the LBT operation determines whether the respective base station 120 is free to transmit. When, at 615, the outcome of the LBT operation indicates that a respective base station 120 is free to transmit, such as by passing the clear channel assessment, the respective base station 120 transmits the DL transmission to the user equipment 110. At 620, the respective base station 120 that sends the DL transmission also communicates transmit-timing information (TTI) to other respective base stations 120 in the ACS. Optionally, the TTI can be transmitted to a master base station, such as the master base station 121.

When the outcome of the LBT operation indicates that a respective base station 120 is not free to transmit (*e.g.*, does not pass the clear channel assessment), the respective base station 120 performs, at 625, another LBT operation. At 630, an outcome of the other LBT operation determines whether the respective base station 120 is free to transmit. When the outcome of the other LBT operation indicates that the respective base station 120 is not free to transmit, the respective base station 120 performs yet another LBT operation (*e.g.*, at 625).

When the outcome of the other LBT operation indicates that the respective base station 120 is free to transmit, the respective base station 120 may transmit, at 635, a transmit-timing information request to the master base station 121. In implementations in which the respective base station 120 requests the transmit-timing information, the master base station 121 sends, at 640, the transmit-timing information to the requesting base station 120.

The transmit-timing information includes, inter alia, information associated with DL transmissions performed by other base stations 120 in the ACS. This information can be used by the requesting base station 120 to determine whether and when to begin a DL transmission, for example by providing information about other DL transmissions (*e.g.*, DL transmissions that are in-progress or other information that may cause the respective base station 120 to delay transmitting). At 645, the respective base station 120 transmits the DL transmission to the user equipment 110. In cases in which the respective base station 120 requested the transmit-timing information, the base station 120 transmits the DL transmission in accordance with the transmit-timing information received from the master base station 121.

### Example Methods

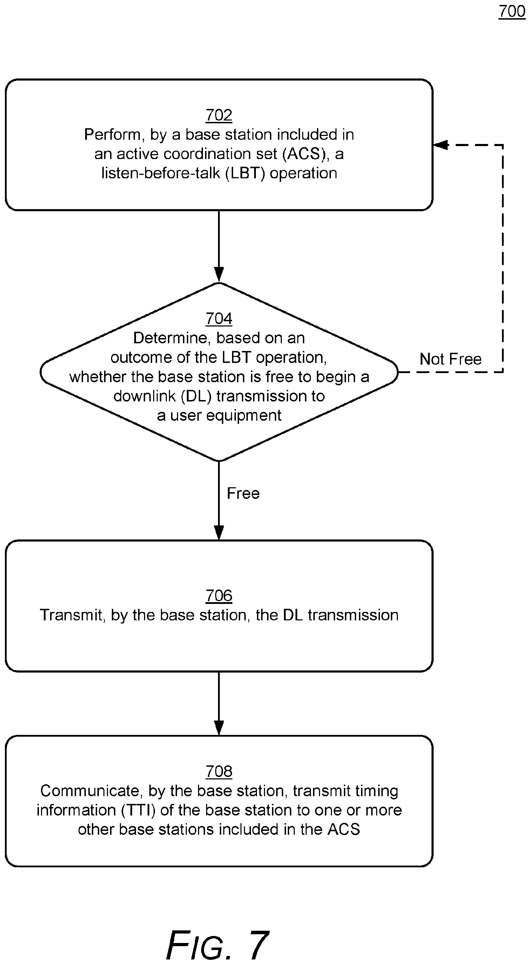

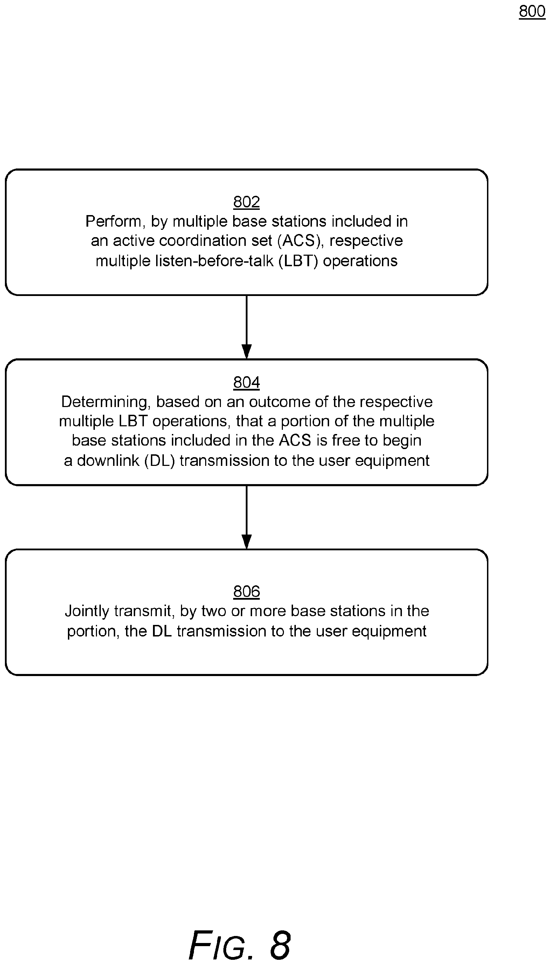

Example methods 700 and 800 are described with reference to FIGs. 7 and 8 in accordance with one or more aspects of an active coordination set for shared-spectrum environments. The order in which the method blocks are described are not intended to be construed as a limitation, and any number of the described method blocks can be skipped or combined in any order to implement a method or an alternate method. Generally, any of the components, modules, methods, and operations described herein can be implemented using software, firmware, hardware (*e.g*., fixed logic circuitry), manual processing, or any combination thereof. Some operations of the example methods may be described in the general context of executable instructions stored on computer-readable storage memory that is local and/or remote to a computer processing system, and implementations can include software applications, programs, functions, and the like. Alternatively or in addition, any of the functionality described herein can be performed, at least in part, by one or more hardware logic components, such as, and without limitation, Field-programmable Gate Arrays (FPGAs), Application-specific Integrated Circuits (ASICs), Application-specific Standard Products (ASSPs), System-on-a-chip systems (SoCs), Complex Programmable Logic Devices (CPLDs), and the like.

FIG. 7 illustrates example method(s) 700 of an active coordination set for shared-spectrum environments. The example method(s) 700 are generally related to listen-before-talk (LBT) operations that one or more respective base stations, of multiple base stations included in the ACS, perform to determine whether the respective base stations are free to begin a DL transmission. At block 702, a base station that is included in the ACS (*e.g*., a respective one of the base stations 120) performs an LBT operation. The LBT operation can be any suitable LBT operation. For example, the base station can perform a clear channel assessment (CCA) or an extended CCA (eCCA) to determine whether the base station is free to begin a DL transmission to a user equipment (*e.g*., to the user equipment 110).

The shared-spectrum environment can include any of a variety of radio frequency bands, such as either or both of unlicensed spectrum or a citizens broadband radio service (CBRS) spectrum. The CBRS spectrum can include a frequency range between 3.550 GHz and 3.700 GHz. The unlicensed band may be, for example, a standalone 5G or 6G unlicensed band (*e.g.*, 5G NR-U) or a license-assisted access environment (*e.g*., LAA 5G NR-U) in which the base station uses a licensed band as an anchor (*e.g*., for signaling) while one or more unlicensed bands are used for carrying data.

At block 704, based on an outcome of the LBT operation, the base station determines whether the base station is free to begin the DL transmission to the user equipment. In cases in which the base stations determines that the base station is not free to begin the DL transmission, the base station performs another LBT operation (as shown by a dashed-line arrow to block 702). The other LBT operation may be a same or a different type of LBT operation with respect to the LBT operation of block 702. At block 706, based on a determination that the base station is free to begin the DL transmission to the user equipment, the base station transmits the DL transmission to the user equipment (*e.g.*, the base station 120 can transmit the DL transmission to the user equipment 110).

At block 708, the base station communicates transmit-timing information (TTI) to one or more other base stations of the multiple base stations included in the ACS. For example, a respective base station 120 that transmits the DL transmission can communicate the TTI to other base stations 120. In some implementations, communicating the TTI can enable the base station 120 and the one or more of the other base stations to jointly transmit the DL transmission to the user equipment 110. As noted, the TTI may include information associated with DL transmissions performed by other base stations in the ACS (*e.g.*, other of the multiple base stations 120). For example, the TTI may include information about other DL transmissions (*e.g.*, DL transmissions that are in-progress by other base stations 120 in the ACS or other information that may cause the respective base station to delay transmitting).

In some implementations, the base station communicates the TTI to the one or more other base stations of the multiple base stations included in the ACS directly. For example, the base station can use the j oint communication scheduler 268 or the LBT manager 270 to transmit the TTI to the other base stations. In other implementations, the TTI may be transmitted to a master base station (*e.g.*, the master base station 121) that is configured to relay the TTI to the multiple base stations included in the ACS. In either case, the TTI can be communicated between the base stations, including the master base station, using any suitable method (*e.g.*, using the wireless communication link 130, an X2 interface, the Xn interfaces 106, or a similar 6G interface), as described herein.

In some cases, subsequent to performing the other LBT operation and determining, based on the outcome of the other LBT operation, that the base station is free to begin a DL transmission, the base station may request, from the master base station, information related to the TTI from the multiple base stations included in the ACS. The requesting base station can then use the TTI from the master base station to determine whether or when to begin a DL transmission. For example, the requesting base station can use information about other DL transmissions that are in-progress (or other information included in the TTI) to delay or commence transmitting the DL transmission.

Further, to align the symbol boundary across the respective different base stations in the ACS, base stations that have cleared the LBT operation may begin the DL transmission at a symbol boundary of an orthogonal frequency-division multiplexing (OFDM) symbol (*e.g.*, as determined based on the TTI). The base stations can determine the symbol boundary based on the TTI that was communicated between the base stations (or from the master base station). Additionally or alternatively, the base stations that have cleared the LBT operation may begin the DL transmission at an OFDM symbol that includes a user equipment reference signal (UE-RS), such as a channel state information reference signal (CSI-RS) or a demodulation reference signal (DMRS). In this way, the user equipment can perform, for example, channel estimation based on a pilot that is associated with the symbol that includes the UE-RS.

FIG. 8 illustrates another example method(s) 800 of an active coordination set for shared-spectrum environments. The example method(s) 800 are generally related to LBT operations that the multiple base stations included in the ACS can perform to determine whether the multiple base stations are free to begin a DL transmission. At block 802, the multiple base stations that are included in the ACS (*e.g.*, the base stations 120) perform respective LBT operations. The LBT operation can be any suitable LBT operation and the base stations 120 may perform one or more LBT operations. For example, the base stations can perform respective CCA or eCCA procedures to determine whether the base stations are free to begin DL transmissions to a user equipment (*e.g.*, to the user equipment 110). As described above, the shared-spectrum environment can include any of a variety of frequencies, such as either or both of an unlicensed spectrum or a citizens broadband radio service (CBRS) spectrum.

At block 804, based on an outcome of the respective LBT operations performed by the multiple base stations, it is determined (*e.g.*, by a master base station, such as the master base station 121) that a portion of the multiple base stations included in the ACS is free to begin a DL transmission to the user equipment. The portion may be any suitable portion, and may be adjusted by the base stations or by the user equipment. For example, the portion may be all of the multiple base stations included in the ACS, approximately 75 percent of the multiple base stations included in the ACS, or approximately 90 percent of the multiple base stations included in the ACS. In this way, a DL transmission duration for a portion of the multiple base stations in the ACS, which portion may include all of the base stations in the ACS, can be a same or similar DL transmission duration.

At block 806, two or more respective base stations of the one or more base stations in the portion of the multiple base stations start jointly transmitting the DL transmission to the user equipment (*e.g.*, two or more base stations 120 can jointly transmit the DL transmission to the user equipment 110).

The following paragraphs describe several examples of an active coordination sets for shared-spectrum environments.

### Conclusion

Various different aspects are described, and it is to be appreciated that each described aspect can be implemented independently or in connection with one or more other described aspects.

## Claims

1. A method for operating, in a shared-spectrum environment, an active coordination set, ACS, for joint wireless communication between a user equipment and a first base station of multiple base stations included in the ACS, the method comprising:
performing, by the first base station included in the ACS, a first listen-before-talk, LBT, operation;
determining, based on an outcome of the first LBT operation, that the first base station included in the ACS is free to begin a downlink, DL, transmission to the user equipment; and
communicating, by the first base station included in the ACS, first transmit-timing information, TTI, to a second base station of the multiple base stations included in the ACS, the communicating performed using an Xn interface or an X2 interface in order to jointly transmit with the second base station the DL transmission to the user equipment.

2. The method of claim 1, further comprising:
receiving, by the first base station, second TTI, from a third base station included in the ACS.

3. The method of claim 2, wherein the receiving the second TTI from the third base station included in the ACS further comprises:
receiving the second TTI using an Xn interface or an X2 interface.

4. The method of claim 2 or claim 3, wherein the first base station is a master base station for the ACS, and wherein the receiving the second TTI is effective to direct the master base station to relay the second TTI to the multiple base stations included in the ACS.

5. The method of any of claims 2-4, further comprising:
determining, based on an outcome of the first LBT operation, that the first base station is not free to begin the DL transmission to the user equipment;
performing, by the first base station, a second LBT operation; and
in response to determining, based on an outcome of the second LBT operation, that the first base station is free to begin the DL transmission to the user equipment, transmitting, by the first base station, the DL transmission.

6. The method of claim 5, further comprising:
receiving, from the third base station, a request for information related to the TTI from the multiple base stations included in the ACS; and
transmitting, to the third base station, the requested information, the transmitting directing the third base station to determine, based on the requested information, whether to transmit the DL transmission.

7. The method of any of claims 2-6, wherein the transmitting the DL transmission further comprises beginning the DL transmission at a symbol boundary, as determined based on the second TTI, of an orthogonal frequency-division multiplexing, OFDM, symbol.

8. The method of any of claims 2-7, wherein the transmitting the DL transmission further comprises beginning the DL transmission at an OFDM symbol that includes a user equipment reference signal.

9. The method of any of the preceding claims, wherein the shared-spectrum environment comprises radio frequency bands in either unlicensed spectrum or citizens broadband radio service, CBRS, spectrum.

10. The method of any of the preceding claims, further comprising:
based on the first TTI, jointly transmitting the DL transmission to the user equipment, by the first base station and the second base station.

11. A base station comprising:
one or more radio frequency (RF) transceivers; and
a processor and memory system configured to perform any of the methods of claims 1-10.

12. A computer-readable medium comprising instructions that, when executed by one or more processors, cause a device incorporating the one or more processors to perform any of the methods of claims 1-10.

## Patentansprüche

1. Verfahren zum Betrieb eines aktiven Koordinationssatzes, ACS, in einer Shared-Spectrum-Umgebung für eine gemeinsame drahtlose Kommunikation zwischen einem Benutzergerät und einer ersten Basisstation von mehreren Basisstationen, die in dem ACS eingeschlossen sind, wobei das Verfahren umfasst:
Durchführen einer ersten Listen-before-Talk-Operation, LBT-Operation, durch die erste Basisstation, die in dem ACS eingeschlossen ist;
Bestimmen auf der Basis eines Resultats der ersten LBT-Operation, dass die erste Basisstation, die in dem ACS eingeschlossen ist, frei ist, eine Downlink-Übertragung, DL-Übertragung, an das Benutzergerät zu beginnen; und
Kommunizieren erster Übertragungstiming-Informationen, TTI, durch die erste Basisstation, die in dem ACS eingeschlossen ist, an eine zweite Basisstation der mehreren Basisstationen, die in dem ACS eingeschlossen sind, wobei das Kommunizieren unter Verwendung einer Xn-Schnittstelle oder einer X2-Schnittstelle durchgeführt wird, um die DL-Übertragung gemeinsam mit der zweiten Basisstation an das Benutzergerät zu übertragen.

2. Verfahren nach Anspruch 1, ferner umfassend:
Empfangen zweiter TTI durch die erste Basisstation von einer dritten Basisstation, die in dem ACS eingeschlossen ist.

3. Verfahren nach Anspruch 2, wobei das Empfangen der zweiten TTI von der dritten Basisstation, die in dem ACS eingeschlossen ist, ferner umfasst:
Empfangen der zweiten TTI unter Verwendung einer Xn-Schnittstelle oder einer X2-Schnittstelle.

4. Verfahren nach Anspruch 2 oder Anspruch 3, wobei die erste Basisstation eine Master-Basisstation für den ACS ist und wobei das Empfangen der zweiten TTI wirksam ist, um die Master-Basisstation anzuleiten, die zweiten TTI zu den mehreren Basisstationen, die in dem ACS eingeschlossen sind, weiterzuleiten.

5. Verfahren nach einem der Ansprüche 2-4, ferner umfassend:
Bestimmen auf der Basis eines Resultats der ersten LBT-Operation, dass die erste Basisstation nicht frei ist, die DL-Übertragung an das Benutzergerät zu beginnen;
Durchführen einer zweiten LBT-Operation durch die erste Basisstation und
als Reaktion auf das Bestimmen auf der Basis eines Resultats der zweiten LBT-Operation, dass die erste Basisstation frei ist, die DL-Übertragung an das Benutzergerät zu beginnen, Übertragen der DL-Übertragung durch die erste Basisstation.

6. Verfahren nach Anspruch 5, ferner umfassend:
Empfangen einer Anforderung von Informationen in Bezug auf die TTI von den mehreren Basisstationen, die in dem ACS eingeschlossen sind, von der dritten Basisstation und
Übertragen der angeforderten Informationen an die dritte Basisstation, wobei das Übertragen die dritte Basisstation anleitet, auf der Basis der angeforderten Informationen zu bestimmen, ob die DL-Übertragung zu übertragen ist.

7. Verfahren nach einem der Ansprüche 2-6, wobei das Übertragen der DL-Übertragung ferner ein Beginnen der DL-Übertragung an einer Symbolgrenze, wie auf der Basis der zweiten TTI bestimmt, eines Symbols eines orthogonalen Frequenzmultiplexverfahrens, OFDM, umfasst.

8. Verfahren nach einem der Ansprüche 2-7, wobei das Übertragen der DL-Übertragung ferner ein Beginnen der DL-Übertragung an ein OFDM-Symbol, das ein Benutzergerätereferenzsignal einschließt, umfasst.

9. Verfahren nach einem der vorhergehenden Ansprüche, wobei die Shared-Spectrum-Umgebung Radiofrequenzbänder in entweder einem unlizenzierten Spektrum oder einem Citizens-Broadband-Radio-Service-Spektrum, CBRS-Spektrum, umfasst.

10. Verfahren nach einem der vorhergehenden Ansprüche, ferner umfassend:
auf der Basis der ersten TTI gemeinsames Übertragen der DL-Übertragung an das Benutzergerät durch die erste Basisstation und die zweite Basisstation.

11. Basisstation, umfassend:
einen oder mehrere Radiofrequenztransceiver (RF) und
ein Prozessor- und Speichersystem, das konfiguriert ist, um ein beliebiges der Verfahren nach den Ansprüchen 1-10 durchzuführen.

12. Computerlesbares Medium, umfassend Anweisungen, die bei Ausführung durch einen oder mehrere Prozessoren bewirken, dass eine Vorrichtung, die den einen oder die mehreren Prozessoren einbindet, ein beliebiges der Verfahren nach den Ansprüchen 1-10 durchführt.

## Revendications

1. Procédé de fonctionnement, dans un environnement à spectre partagé, d'un ensemble de coordination actif, ACS, pour une communication sans fil commune entre un équipement utilisateur et une première station de base de plusieurs stations de base incluses dans l'ACS, le procédé comprenant :
l'exécution, par la première station de base incluse dans l'ACS, d'une première opération d'accès multiple avec écoute de porteuse, LBT ;
la détermination, sur la base d'un résultat de la première opération LBT, que la première station de base incluse dans l'ACS est libre de commencer une liaison descendante, DL, vers l'équipement utilisateur ; et
la communication, par la première station de base incluse dans l'ACS, des premières informations de synchronisation de transmission, TTI, à une deuxième station de base des plusieurs stations de base incluses dans l'ACS, la communication étant réalisée en utilisant une interface Xn ou une interface X2 afin de transmettre conjointement avec la deuxième station de base la transmission DL à l'équipement utilisateur.

2. Procédé selon la revendication 1, comprenant en outre :
la réception, par la première station de base, de deuxièmes TTI, depuis une troisième station de base incluse dans l'ACS.

3. Procédé selon la revendication 2, dans lequel la réception des deuxièmes TTI depuis la troisième station de base incluse dans l'ACS, comprend en outre :
la réception des deuxièmes TTI utilisant une interface Xn ou une interface X2.

4. Procédé selon la revendication 2 ou la revendication 3, dans lequel la première station de base est une station de base maîtresse de l'ACS, et dans lequel la réception des deuxièmes TTI est efficace pour ordonner à la station de base maîtresse de relayer les deuxièmes TTI aux plusieurs stations de base incluses dans l'ACS.

5. Procédé selon l'une quelconque des revendications 2 à 4, comprenant en outre :
la détermination, sur la base d'un résultat de la première opération LBT, que la première station de base n'est pas libre de commencer la transmission DL à l'équipement utilisateur ;
l'exécution, par la première station de base, d'une deuxième opération LBT ; et
en réponse à la détermination, sur la base d'un résultat de la deuxième opération LBT, que la première station de base est libre de commencer la transmission DL à l'équipement utilisateur, la transmission, par la première station de base, de la transmission DL.

6. Procédé selon la revendication 5, comprenant en outre :
la réception, de la troisième station de base, d'une demande d'informations concernant les TTI provenant des plusieurs stations de base incluses dans l'ACS ; et
la transmission, à la troisième station de base, des informations demandées, la transmission ordonnant à la troisième station de base de déterminer, sur la base des informations demandées, s'il faut transmettre la transmission DL.

7. Procédé selon l'une quelconque des revendications 2 à 6, dans lequel la transmission de la transmission DL comprend en outre le début de la transmission DL à un symbole de limite, déterminé sur la base des deuxièmes TTI, d'un symbole de multiplexage par répartition en fréquence orthogonale, OFDM.

8. Procédé selon l'une quelconque des revendications 2 à 7, dans lequel la transmission de la transmission DL comprend en outre le début de la transmission DL à un symbole OFDM qui comprend un signal de référence d'équipement utilisateur.

9. Procédé selon l'une quelconque des revendications précédentes, dans lequel l'environnement à spectre partagé comprend des bandes de fréquences radio dans un spectre sans licence ou un spectre de service radio à large bande pour les citoyens, CBRS.

10. Procédé selon l'une quelconque des revendications précédentes, comprenant en outre :
sur la base des premières TTI, la transmission commune de la transmission DL à l'équipement utilisateur, par la première station de base et la deuxième station de base.

11. Station de base comprenant :
un ou plusieurs émetteurs-récepteurs de fréquences radio (RF) ; et
un système de processeur et de mémoire configuré pour effectuer l'un quelconque des procédés selon les revendications 1 à 10.

12. Support lisible par ordinateur comprenant des instructions qui, lorsqu'elles sont exécutées par un ou plusieurs processeurs, entraînent un dispositif intégrant le ou les plusieurs processeurs à effectuer l'un quelconque des procédés selon les revendications 1 à 10.
